# FASCICULE DE BREVET EUROPEEN

(11) **EP 2 052 941 B1**
(45) Date de publication et mention de la délivrance du brevet: **14.12.2011**
(21) Numéro de dépôt: 08166231.4
(22) Date de dépôt: 09.10.2008
(51) Int. Cl.: B61F 15/28, B60B 37/06, B61L 1/18

(54) **Dispositif de court-circuit de voie et de retour de courant pour véhicule ferroviaire.**
Kurzschluss- und Erdungsvorrichtung für Schienenfahrzeuge
Short-circuit and current return device for a railway vehicle.

(30) Priorité: 15.10.2007 FR 0758311
(43) Date de publication de la demande: 29.04.2009
(73) Titulaire: ALSTOM Transport SA, 92300 Levallois-Perret (FR)
(72) Inventeur: Costes, Cyril Florent, 71200 Le Creusot (FR); Rodet, Alain Jean, 71100 Chalon sur Saône (FR); Longueville, Yves, 71210 Torcy (FR)
(74) Mandataire: Blot, Philippe Robert Emile

(56) Documents cités:
- FR-A- 860 539
- GB-A- 1 231 547
- JP-A- 2005 059 730

## Description

La présente invention concerne un essieu équipé comprenant un dispositif de court-circuit de voie et de retour de courant pour un véhicule ferroviaire, l'essieu comprenant un arbre de transmission mobile en rotation et solidaire en rotation de deux roues chacune pourvue d'un bandage, le dispositif comprenant une source d'alimentation en courant électrique, ladite source alimentant en courant électrique un ensemble de frottement.

L'invention concerne également un véhicule ferroviaire comprenant un tel dispositif de court-circuit.

Un dispositif de court-circuit entre les roues d'un véhicule ferroviaire est utilisé dans les trains afin d'assurer un court-circuit entre les rails d'une voie de chemin de fer sur laquelle circule le véhicule pour contrôler la signalisation sur la voie de chemin de fer.

Les dispositifs de court-circuit du type décrit ci-dessus sont connus et on prévoit un tel dispositif pour chaque roue afin d'assurer le court-circuit entre les rails. Ainsi, on prévoit deux dispositifs indépendants reliés respectivement à une roue.

Un dispositif de retour de courant est utilisé dans les véhicules ferroviaires pour établir un chemin bien défini pour la circulation du courant depuis l'équipement d'alimentation électrique du train jusqu'aux rails. Par chemin bien défini, on entend une liaison électrique continue permettant de contourner et de sauvegarder les structures métalliques sensibles au passage de courant, comme par exemple les roulements de boites d'essieu.

Selon diverses réalisations, les roues tournent indépendamment l'une de l'autre ou sont reliées par un essieu les rendant solidaires en rotation.

Dans le cas de roues indépendantes, le chemin du retour de courant passe d'une roue à l'autre par le moyeu de celles-ci et par un carter d'arbre à l'intérieur duquel les moyeux sont montés en rotation. Une telle réalisation pose un certains nombres de problèmes car le court-circuit n'est pas réellement contrôlé et le courant n'est pas isolé de la structure du véhicule ferroviaire.

Dans le cas de roues reliées par un essieu, le retour de courant passe par ledit essieu. La encore, le courant n'est pas isolé de la structure du véhicule ferroviaire. Le document JP-2005-59730 décrit par exemple une telle réalisation.

De plus dans les deux cas décrits ci-dessus, la résistance entre les deux bandages de roue peut présenter une instabilité dans le temps. Pour une question de sécurité, cette résistance doit être maintenue à une valeur inférieure à 10mΩ.

Enfin, le fait de prévoir deux dispositifs pourvus chacun d'un frotteur augmente le nombre de pièces et les risques de dysfonctionnements, par exemple dus à la casse, à l'usure ou à la pollution des frotteurs. Ceci augmente aussi la valeur de la résistance qui est principalement due aux organes frottants.

Le document FR-860 539 décrit un essieu selon le préambule de la revendication 1.

L'un des objectifs de l'invention est de pallier ces inconvénients en proposant un dispositif de court-circuit du type décrit ci-dessus, dans lequel la stabilité et le maintien de la résistance à une valeur inférieure à une valeur seuil sont assurés et dans lequel les risques de dysfonctionnement sont limités car le court circuit est assuré sans passer par des organes frottants.

A cet effet, l'invention concerne un essier équipé pourvu d'un dispositif de court-circuit et de retour de courant du type précité dans lequel ledit ensemble de frottement est unique et est connecté électriquement à un câblage connectant électriquement les bandages des deux roues, ledit câblage comprenant une portion de câble passant à l'intérieur de l'arbre entre les deux roues.

Selon d'autres caractéristiques du dispositif de court-circuit et de retour de courant :
- l'ensemble de frottement comprend des frotteurs et un disque de frottement frottant contre les frotteurs, l'ensemble de frottement étant solidaire d'un élément conducteur cannerté électriquement au câblage ;
- les frotteurs, respectivement le disque de frottement, sont fixes et le disque de frottement, respectivement les frotteurs, sont solidaires en rotation de l'arbre de transmission ;
- l'ensemble de frottement et l'élément conducteur sont disposés dans le moyeu d'une des deux roues :
- le moyeu de la roue comprend un matériau isolant disposé contre la paroi du moyeu et entourant l'ensemble de frottement et l'élément conducteur ;
- un matériau isolant est disposé dans le moyeu de l'autre roue et entoure une portion du câblage passant par ledit moyeu ;
- un matériau isolant est disposé à l'intérieur de l'arbre de transmission et entoure la portion de câble le traversant ;
- le retour de courant passe par un câble alimentant l'ensemble de frottement, puis par ledit ensemble de frottement, puis par le câblage ;
- la source d'alimentation est l'équipement d'alimentation électrique du véhicule ferroviaire.

L'invention concerne également un véhicule ferroviaire comprenant au moins un bogie pourvu d'un essieu mobile en rotation et solidaire en rotation de deux roues chacune pourvue d'un bandage et comprenant un dispositif de court-circuit et de retour de courant tel que décrit ci-dessus, ledit dispositif connectant électriquement les bandages desdites deux roues.

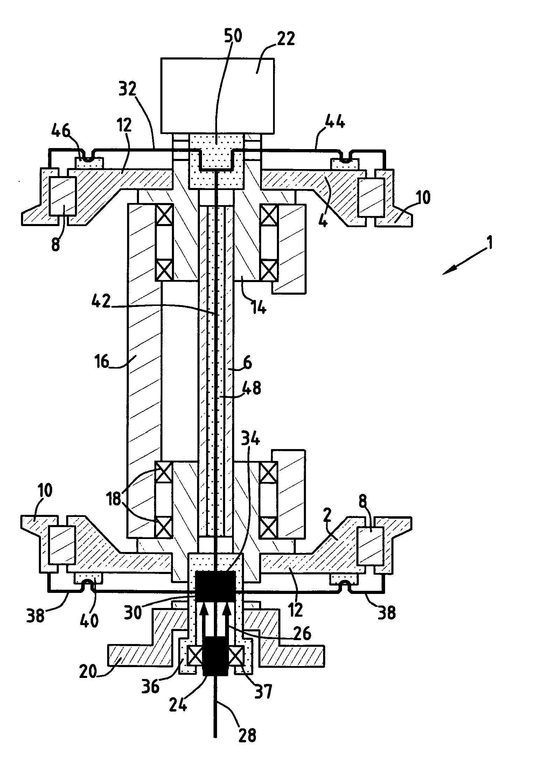

D'autres aspects et avantages de l'invention apparaîtront au cours de la description qui suit, donnée à titre d'exemple et faite en référence à la figure annexée qui est une représentation schématique d'un essieu équipé en coupe comprenant deux roues reliées par un arbre de transmission.

En référence à la figure, on a représenté un essieu équipé 1 pourvu de deux roues 2, 4 solidaires en rotation par l'intermédiaire d'un arbre de transmission 6.

Les roues 2 et 4 sont à bandage élastique, c'est-à-dire qu'elles comprennent un élément élastique 8 séparant le bandage 10 des roues 2 et 4 du corps principal 12 de ces roues.

Chaque roue 2, 4 comprend un moyeu 14 présentant un alésage central autour de l'axe de rotation de la roue. Les parties extrêmes de l'arbre 6 sont respectivement introduites dans un moyeu 14 afin de solidariser les roues en rotation.

Les moyeux 14 sont montés en rotation à l'intérieur d'un carter 16 au moyen de roulements 18.

Un disque de frein 20 est associé à une roue 2, tandis qu'une boîte à engrenages 22 est associée à l'autre roue 4. Le disque de frein 20 est pourvu d'un alésage central concentrique avec l'alésage central du moyeu 14 de la roue 2.

On décrit à présent le dispositif de court-circuit et de retour de courant utilisé dans l'essieu équipé 1 décrit ci-dessus.

Le dispositif est alimenté en courant au moyen d'une source d'alimentation en courant électrique (non représentée) qui est par exemple l'équipement d'alimentation électrique du véhicule ferroviaire. Le courant est amené par un câblage d'alimentation 28 et passe par un support 24 jusqu'à des frotteurs 26, portés par le support 24 et disposés dans le moyeu 14 de la roue 2. A cet effet, le câblage d'alimentation 28 et le support 24 amenant le courant de l'équipement d'alimentation électrique jusqu'aux frotteurs 26 passent dans l'alésage du disque de frein 22 et débouche dans l'alésage du moyeu 14. Le câblage d'alimentation 28, le support 24 et les frotteurs 26 sont fixes, c'est-à-dire qu'ils ne sont pas entraînés en rotation avec le moyeu 14, comme cela sera décrit ultérieurement.

Les frotteurs 26 sont disposés en regard d'un disque de frottement 30 disposé dans l'alésage du moyeu 14 et solidaire en rotation de celui-ci. Le disque de frottement 30 permet d'assurer le contact avec les frotteurs 26 afin de transférer le courant au reste du câblage 32 du dispositif de court-circuit par l'intermédiaire d'un élément conducteur 34 solidaire du disque de frottement 30.

Les frotteurs 26, le disque de frottement 30 et l'élément conducteur 34 sont entourés par un matériau isolant 36 disposé contre la paroi du moyeu 14. Le matériau isolant 36 s'étend dans l'alésage du moyeu 14 et dans l'alésage du disque de frein 20 afin d'isoler le moyeu 14 et le disque de frein 20 du dispositif de court-circuit.

Le support 24 est entouré par des roulements 37 afin de permettre la rotation du moyeu 14 autour du support 24 et des frotteurs 26 sans entraîner ceux-ci en rotation.

Selon un mode de réalisation, les positions du disque de frottement 30 et des frotteurs 26 sont inversées. Les frotteurs 26 sont alors entraînés en rotation avec le moyeu 14, tandis que le disque de frottement 30 est fixe.

L'ensemble du câblage 32, du disque de frottement 30 et l'élément conducteur 34 sont, quant à eux, entraînés en rotation avec les roues 2 et 4 et l'arbre de transmission 6.

Le câblage 32 comprend plusieurs portions de câble 38 s'étendant de l'élément conducteur 34 au bandage 10 de la roue 2. A cet effet, des ouvertures sont pratiquées dans le moyeu 14 pour laisser passer les portions de câble 38. Les portions de câble 38 peuvent passer chacun par un patin de matériau isolant 40 disposé sur le corps principal 12 de la roue 2 au voisinage de l'élément élastique 8 afin d'isoler la roue 2 du dispositif de court-circuit. Selon divers modes de réalisation, le câblage 32 comprend par exemple deux ou quatre portions de câble 38 et un patin de matériau isolant 40 pour chaque portion de câble 38.

Le câblage 32 comprend en outre une portion de câble 42 passant à l'intérieur de l'arbre 6 entre les deux roues 2 et 4 afin d'amener le courant jusqu'à la roue 4. La portion de câble 42 s'étend à partir de l'élément conducteur 34, traverse l'arbre 6 et débouche dans le moyeu 14 de la roue 4.

Plusieurs portions de câble 44 sont connectées électriquement à la portion de câble 42 et s'étendent jusqu'au bandage 10 de la roue 4 et peuvent passer chacune par un patin de matériau isolant 46, disposé sur le corps principal 12 de la roue 4 au voisinage de l'élément élastique 8, de façon similaire aux portions de câble 38 pour la roue 2. Selon un mode de réalisation, il y a autant de portions de câble 44 que de portions de câble 38.

Un matériau isolant 48 est disposé à l'intérieur de l'essieu 6 et entoure la portion de câble 42 le traversant afin d'isoler l'arbre du dispositif de court-circuit.

Un matériau isolant 50 est disposé dans le moyeu 14 de la roue 4 et entoure la portion de câble 42 et les portions de câble 44 passant par ce moyeu afin d'isoler celui-ci du dispositif de court-circuit.

Le dispositif de court-circuit décrit ci-dessus est donc entièrement isolé de la structure du véhicule ferroviaire ce qui permet de contrôler parfaitement le court-circuit. En particulier, le dispositif de court-circuit décrit ci-dessus permet d'assurer le maintien de la résistance entre les deux bandages 10 de roue à une valeur stable dans le temps inférieure à 10 mΩ pour assurer la fiabilité du court-circuitage. En effet, le court circuit entre les bandages de roue 10 est réalisé sans passer par les organes frottants 26 et 30 mais seulement à l'aide du câblage 34, 38, 42 et 44. De plus, l'isolation du dispositif de court-circuit rend le bogie plus sûre et les risques de dysfonctionnements sont grandement limités ; notamment les roulements 18 sont complètement protégés contre un éventuel passage de courant.

Le dispositif utilise un ensemble de frottement unique, à savoir un disque de frottement 30 et des frotteurs 26, ce qui limite le nombre de pièces et les risques de dysfonctionnement, par exemple dus à la casse, à l'usure ou à la pollution.

Comme indiqué ci-dessus, le court-circuit est assuré par le câblage 34, 38, 42 et 44.

Le retour de courant est assuré, quant à lui, par le câble 28, l'ensemble de frottement, à savoir le support 24, les frotteurs 26 et le disque de frottement 30, puis réutilise le câblage du dispositif de court-circuit car le disque de frottement 30 et en contact avec l'élément conducteur 34.

Le dispositif décrit ci-dessus est appliqué au moins aux essieux de tête et de queue, c'est-à-dire les essieux d'extrémité, d'un véhicule ferroviaire. Selon divers modes de réalisation, tous les essieux peuvent en outre être pourvus d'un tel dispositif ou seul un essieu par bogie peut en outre en être pourvu.

## Revendications

1. Essieu équipé (1) comprenant un dispositif de court-circuit de voie et de retour de courant pour un véhicule ferroviaire l'essieu comprenant un arbre de transmission (6) mobile en rotation et solidaire en rotation de deux roues (2, 4) chacune pourvue d'un bandage (10), ledit dispositif comprenant une source d'alimentation en courant électrique, ladite source alimentant en courant électrique un ensemble de frottement, **caractérisé en ce que** ledit ensemble de frottement est unique et est connecté électriquement à un câblage (32) connectant électriquement les bandages (10) des deux roues (2, 4), ledit câblage (32) comprenant une portion de câble (42) passant à l'intérieur de l'arbre (6) entre les deux roues (2, 4).

2. Essieu équipé (1) selon la revendication 1, **caractérisé en ce que** l'ensemble de frottement comprend des frotteurs (26) et un disque de frottement (30) frottant contre les frotteurs (26), l'ensemble de frottement étant solidaire d'un élément conducteur (34) connecté électriquement au câblage (32).

3. Essieu équipé (1) selon la revendication 2, **caractérisé en ce que** les frotteurs (26), respectivement le disque de frottement (30), sont fixes et le disque de frottement (30), respectivement les frotteurs (26), sont solidaires en rotation de l'arbre de transmission (6).

4. Essieu équipé (1) selon la revendication 2 ou 3, **caractérisé en ce que** l'ensemble de frottement et l'élément conducteur (34) sont disposés dans le moyeu (14) d'une (2) des deux roues.

5. Essieu équipé (1) selon la revendication 4, **caractérisé en ce que** le moyeu (14) de la roue comprend un matériau isolant (36) disposé contre la paroi du moyeu (14) et entourant l'ensemble de frottement et l'élément conducteur (34).

6. Essieu équipé (1) selon la revendication 4 ou 5, **caractérisé en ce qu'**un matériau isolant (50) est disposé dans le moyeu (14) de l'autre roue (4) et entoure une portion du câblage (32) passant par ledit moyeu (14).

7. Essieu équipé (1) selon l'une quelconque des revendications 1 à 5, **caractérisé en ce qu'**un matériau isolant (48) est disposé à l'intérieur de l'arbre de transmission (6) et entoure la portion de câble (42) le traversant.

8. Essieu équipé (1) selon l'une quelconque des revendications 1 à 7, **caractérisé en ce que** le retour de courant passe par un câble (28) alimentant l'ensemble de frottement, puis par ledit ensemble de frottement, puis par le câblage (32).

9. Essieu équipé (1) selon l'une quelconque des revendications 1 à 8, **caractérisé en ce que** la source d'alimentation est l'équipement d'alimentation électrique du véhicule ferroviaire.

10. Véhicule ferroviaire comprenant au moins un bogie pourvue d'au moins un essieu équipé (1) comprenant un arbre de transmission (6) mobile en rotation et solidaire en rotation de deux roues (2, 4) chacune pourvue d'un bandage (10), **caractérisé en ce que** l'essieu équipé (1) est selon l'une quelconque des revendications 1 à 9, le dispositif de court-circuit connectant électriquement les bandages (10) desdites deux roues (2, 4).

## Claims

1. Equipped axle (1) comprising a track short-circuit and current return device for a rail vehicle, the axle comprising a transmission shaft (6) which is movable in terms of rotation and which is fixedly joined in terms of rotation to two wheels (2, 4), each of which is provided with a tyre (10), the device comprising an electric current supply source, the source supplying a friction assembly with electric current, **characterized in that** the friction assembly is alone and is electrically connected to a cable assembly (32) which electrically connects the tyres (10) of the two wheels (2, 4), the cable assembly (32) comprising a cable portion (42) which extends inside the shaft (6) between the two wheels (2, 4).

2. Equipped axle (1) according to claim 1, **characterized in that** the friction assembly comprises friction members (26) and a friction disc (30) which rubs against the friction members (26), the friction assembly being fixedly joined to a conductor element (34) which is electrically connected to the cable assembly (32).

3. Equipped axle (1) according to claim 2, **characterized in that** the friction members (26), the friction disc (30) respectively, are fixed in position and the friction disc (30), the friction members (26), respectively, is fixedly joined to the transmission shaft (6) in terms of rotation.

4. Equipped axle (1) according to claim 2 or 3 **characterized in that** the friction assembly and the conductor element (34) are arranged in the hub (14) of one of the two wheels (2).

5. Equipped axle (1) according to claim 4, **characterized in that** the hub (14) of the wheel comprises an insulating material (36) which is arranged against the wall of the hub (14) and which surrounds the friction assembly and the conductor element (34).

6. Equipped axle (1) according to claim 4, **characterized in that** an insulating material (50) is arranged in the hub (14) of an other of the two wheels (4) and surrounds a cable assembly (32) portion which extends through the hub (14).

7. Equipped axle (1) according to anyone of claims 1 to 5, **characterized** that an insulating material (48) is arranged inside the transmission shaft (6) and surrounds the cable portion (42) which extends through it.

8. Equipped axle (1) according to anyone of claims 1 to 7, **characterized in that** the current return passes via a cable (28) which supplies the friction assembly with electrical power, then via the friction assembly, then via the cable assembly (32).

9. Equipped axle (1) according to anyone of claims 1 to 8, **characterized in that** the electrical power supply source is the electrical power supply equipment of the rail vehicle.

10. A rail vehicle comprising at least one bogie which is provided with at least one equipped axle (1) which comprises a transmission shaft (6) which is movable in terms of rotation and which is fixedly joined in terms of rotation to two wheels (2, 4), each of which is provided with a tyre (10), **characterized in that** the equipped axle (1) is according to anyone of claims 1 to 9, the short-circuit device electrically connecting the tyres (10) of the two wheels (2, 4).

## Patentansprüche

1. Bestückte Achse (1) für ein Eisenbahnfahrzeug umfassend eine Vorrichtung für Gleiskurzschluss und Stromrückleitung, wobei die Achse eine drehbare und gegenüber zwei Rädern (2, 4), von denen jedes mit einer Bereifung (10) versehen ist, drehfeste Antriebswelle (6) umfasst, wobei die genannte Vorrichtung eine elektrische Stromversorgungsquelle umfasst, die eine Schleifkontakteinheit mit elektrischem Strom versorgt, **dadurch gekennzeichnet, dass** die genannte Schleifkontakteinheit eine einzige ist und elektrisch verbunden ist mit einer Verkabelung (32), die die Bereifungen (10) der zwei Räder (2, 4) elektrisch verbindet, wobei die genannte Verkabelung (32) ein Kabelstück (42) umfasst, das innerhalb der Welle (6) zwischen den zwei Rädern (2, 4) verläuft.

2. Bestückte Achse (1) nach Anspruch 1, **dadurch gekennzeichnet, dass** die Schleifkontakteinheit Schleifkontakte (26) und eine gegen die Schleifkontakte (26) reibende Gleitscheibe (30) umfasst, wobei die Schleifkontakteinheit fest mit einem stromführenden Element (34) verbunden ist, das elektrisch mit der Verkabelung (32) verbunden ist.

3. Bestückte Achse (1) nach Anspruch 2, **dadurch gekennzeichnet, dass** die Schleifkontakte (26) - oder die Gleitscheibe (30) - fixiert sind und die Gleitscheibe (30) - bzw. die Schleifkontakte (26) - drehfest mit der Antriebswelle (6) verbunden sind.

4. Bestückte Achse (1) nach Anspruch 2 oder 3, **dadurch gekennzeichnet, dass** die Schleifkontakteinheit und das stromführende Element (34) in der Nabe (14) eines der zwei Räder (2) angeordnet sind.

5. Bestückte Achse (1) nach Anspruch 4, **dadurch gekennzeichnet, dass** die Nabe (14) des Rades ein isolierendes Material (36) umfasst, das gegen die Innenwand der Nabe (14) angeordnet ist und die Schleifkontakteinheit und das stromführende Element (34) umgibt.

6. Bestückte Achse (1) nach Anspruch 4 oder 5, **dadurch gekennzeichnet, dass** ein isolierendes Material (50) in der Nabe (14) des anderen Rades (4) angeordnet ist und einen Teil der Verkabelung (32) umgibt, der durch die genannte Nabe (14) verläuft.

7. Bestückte Achse (1) nach einem der Ansprüche 1 bis 5, **dadurch gekennzeichnet, dass** ein isolierendes Material (48) im Inneren der Antriebswelle (6) angeordnet ist und das es durchquerende Kabelstück (42) umgibt.

8. Bestückte Achse (1) nach einem der Ansprüche 1 bis 7, **dadurch gekennzeichnet, dass** die Stromrückleitung durch ein die Schleifkontakteinheit versorgendes Kabel (28) verläuft, dann durch die genannte Schleifkontakteinheit, dann durch die Verkabelung (32).

9. Bestückte Achse (1) nach einem der Ansprüche 1 bis 8, **dadurch gekennzeichnet, dass** die Versorgungsquelle die Einrichtung zur elektrischen Stromversorgung des Eisenbahnfahrzeugs ist.

10. Eisenbahnfahrzeug umfassend mindestens ein Drehgestell, das mit mindestens einer bestückten Achse (1) versehen ist, die eine drehbare und gegenüber zwei Rädern (2, 4), von denen jedes mit einer Bereifung (10) versehen ist, drehfeste Antriebswelle (6) umfasst, **dadurch gekennzeichnet, dass** die bestückte Achse (1) einem der Ansprüche 1 bis 9 gemäß ist, wobei die Vorrichtung für Kurzschluss die Bereifungen (10) der genannten zwei Räder (2, 4) elektrisch verbindet.
